# EUROPEAN PATENT APPLICATION

(11) **EP 4 716 370 A1**
(43) Date of publication of application: **25.03.2026**
(21) Application number: 25195507.6
(22) Date of filing: 12.08.2025
(51) Int. Cl.: H05B 6/64

(54) **HEATING COOKER**

(30) Priority: 20.09.2024 JP 2024163526
(71) Applicant: Sharp Kabushiki Kaisha, Sakai City, Osaka 590-8522 (JP)
(72) Inventor: MORIMOTO, Shigenori, Sakai City, 590-8522 (JP); YACHI, Mariko, Sakai City, 590-8522 (JP); KITAURA, Tomohiro, Sakai City, 590-8522 (JP)
(74) Representative: Treeby, Philip David William

(57) **Abstract**

A heating cooker (100) includes a heating chamber (2), first glass (61), and an imaging device (4). The heating chamber (2) has the panel member (3) surrounding the inner space (Sp1) capable of accommodating a heating object, and heats a heating object using an electromagnetic wave. The first glass (61) closes the opening portion (310) formed in a part of the panel member (3). The imaging device (4) is arranged on the outer side of the heating chamber (2) and captures the inner space (Sp1) through the first glass (61). A heat insulating layer (60) is located between the first glass (61) and the imaging device (4).

## Description

### BACKGROUND OF THE INVENTION

### 1. TECHNICAL FIELD

The present disclosure relates to a heating cooker.

### 2. DESCRIPTION OF THE RELATED ART

As a related art, a heating cooker such as a microwave oven that irradiates a heating object (object to be heated) in a heating chamber with an electromagnetic wave (microwave) to heat the heating object is known (see, for example, JP 2019-190771 A). The heating cooker according to the related art includes an imaging device (camera) that captures (shoots) the inside of the heating chamber.

The imaging device is arranged on an upper wall of the heating chamber so as to face the inside of the heating chamber, and shoots the inside of the heating chamber through an opening (top plate opening) provided in a top plate portion of the heating chamber. The upper wall of the heating chamber is provided with a wall surface opening, and a wall surface recessed portion formed in a recessed shape is provided upward from a peripheral edge of the wall surface opening. A recessed bottom portion opening which is an opening for shooting is provided at a bottom portion, that is, on the upper side, of the wall surface recessed portion. A side wall of the wall surface recessed portion has a tapered shape that narrows from the heating chamber side toward the wall surface opening side. A substantially flat plate-shaped top plate portion in which an opening (top plate opening) is formed is provided below the upper wall so as to be parallel to the upper wall. A cross-sectional area of an opening surface of the recessed bottom portion opening is smaller than a cross-sectional area of an opening surface of the wall surface opening. As described above, by making an opening portion of the recessed bottom portion opening smaller, it is possible to suppress leakage of an electromagnetic wave from the inside of the heating chamber while securing a wide visual field range.

### SUMMARY OF THE INVENTION

In the configuration of the above related art, leakage of an electromagnetic wave from the inside of the heating chamber can be suppressed, but there is a possibility that the imaging device is deteriorated by heat from the inside of the heating chamber.

An object of the present disclosure is to provide a heating cooker in which an imaging device is less likely to deteriorate.

A heating cooker according to one aspect of the present disclosure includes a heating chamber, first glass, and an imaging device. The heating chamber has a panel member surrounding an inner space capable of accommodating a heating object, and heats the heating object using electromagnetic waves. The first glass closes an opening portion formed in a part of the panel member. The imaging device is arranged on the outer side of the heating chamber and captures the inner space through the first glass. A heat insulating layer is located between the first glass and the imaging device.

According to the present disclosure, it is possible to provide a heating cooker in which an imaging device is less likely to deteriorate.

### BRIEF DESCRIPTION OF THE DRAWINGS

FIG. 1 is a schematic perspective view of a heating cooker according to a first embodiment;
FIG. 2 is a schematic perspective view of a main part of the heating cooker according to the first embodiment as viewed obliquely from below;
FIG. 3 is a schematic perspective view of a main part of the heating cooker according to the first embodiment as viewed obliquely from above;
FIG. 4 is a schematic perspective view of a main part of the heating cooker according to the first embodiment;
FIG. 5 is a schematic exploded perspective view of a main part of the heating cooker according to the first embodiment;
FIG. 6 is a schematic exploded perspective view of a main part of the heating cooker according to the first embodiment;
FIG. 7 is a schematic cross-sectional view of a main part of the heating cooker according to the first embodiment;
FIG. 8 is a cross-sectional view taken along line A1-A1 of FIG. 7, illustrating a main part of the heating cooker according to the first embodiment; and
FIG. 9 is a schematic right side view illustrating a main part of the heating cooker according to the first embodiment.

### DETAILED DESCRIPTION

Hereinafter, an embodiment of the present disclosure will be described with reference to the accompanying drawings. An embodiment below is an example embodying the present disclosure, and is not intended to limit the technical scope of the present disclosure.

### FIRST EMBODIMENT

### [1] GENERAL OUTLINE

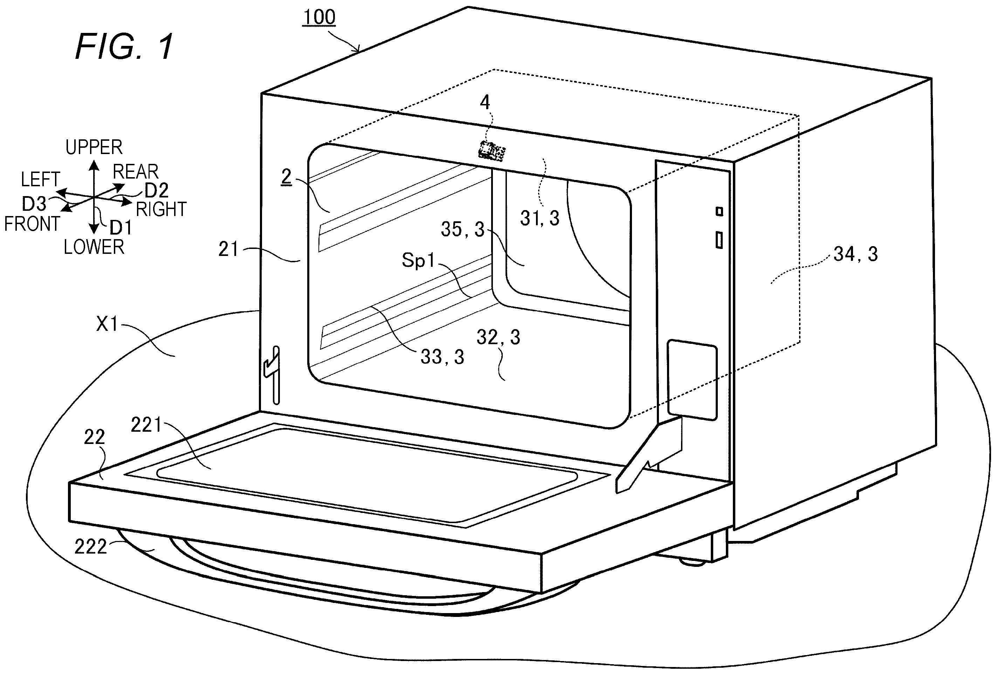

First, an outline of a heating cooker 100 according to the present embodiment will be described with reference to FIG. 1.

The heating cooker 100 according to the present embodiment heats, for example, a food, a food product, a beverage, or various other heating objects. The heating cooker 100 irradiates a heating object in a heating chamber 2 with an electromagnetic wave to heat the heating object, like a microwave oven, for example. The heating cooker 100 only needs to have a function of heating a heating object using at least an electromagnetic wave, and may have, for example, a grill function, an oven function of heating with convective heat, and/or a steam function of heating with water vapor.

The "electromagnetic wave" in the present disclosure means a physical phenomenon in which electromagnetic energy propagates in space while vibrating, and includes a radio wave and light. The heating cooker 100 irradiates a heating object in the heating chamber 2 with a microwave that is an electromagnetic wave of 2.45 GHz as an example. By this, an electromagnetic wave (microwave) vibrates a water molecule and the like in a heating object, and temperature of the entire heating object rises.

There are two types of the heating cooker 100 of this type, that is, "flat table type" and "turn table type". A flat table type heating cooker includes an antenna below a bottom surface of a heating chamber, and irradiates the inside of the heating chamber with an electromagnetic wave from the antenna while rotating the antenna, so as to efficiently diffuse the electromagnetic wave in the heating chamber to evenly heat a heating object. A turn table type heating cooker includes a turn table on which a heating object is placed in a heating chamber, and irradiates the inside of the heating chamber with an electromagnetic wave from a fixed antenna while rotating the turn table, so as to evenly heat a heating object on the turn table. In the present embodiment, as an example, the heating cooker 100 is a flat table type microwave oven.

The heating cooker 100 is, for example, an electric device that operates by receiving power supply from a power system (AC power supply). That is, the heating cooker 100 operates to heat a heating object by irradiating the heating object with an electromagnetic wave by receiving power supply.

As illustrated in FIG. 1, for example, the heating cooker 100 is used while being placed on an installation surface X1 including a shelf, a counter, or the like of a house. The heating cooker 100 stands independently on the installation surface X1 while being placed on the installation surface X1. That is, the heating cooker 100 according to the present embodiment is a self-standing and portable device, and the user can install the heating cooker 100 at an optional position on the installation surface X1.

In the present embodiment, for convenience of description, a vertical direction in a state where the heating cooker 100 can be used is defined as an up-down direction D1. Further, a left-right direction D2 is defined with reference to a direction in which the heating cooker 100 is viewed from the front, and a front-rear direction D3 is defined with the front surface side of the heating cooker 100 as the front side and the rear surface side as the rear side. However, these directions are not intended to limit a use direction (direction at the time of use) of the heating cooker 100.

The heating cooker 100 includes the heating chamber 2 capable of accommodating a heating object, and a heating source for heating the heating object. The heating source irradiates a space (inner space Sp1) in the heating chamber 2 with an electromagnetic wave to heat a heating object accommodated in the heating chamber 2.

In the present embodiment, the heating chamber 2 has a hollow rectangular parallelepiped shape, and includes a box body 21 and a door body 22. The box body 21 is formed in a box shape with one surface (front surface in the present embodiment) opened. The door body 22 is attached to the box body 21 in a state where an opening surface (front surface in the present embodiment) of the box body 21 can be opened and closed.

Here, the door body 22 is supported to be openable and closable with respect to the box body 21 by a support portion (hinge) provided in a lower portion on the front surface side of the box body 21. An upper portion of the door body 22 falls to the front side to be at an open position (see FIG. 1), and stands to the back side to be at a closed position. Furthermore, the door body 22 includes a door window 221 through which the inside of the heating chamber 2 (inner space Sp1) can be visually recognized through the door body 22, and a handle 222 that can be gripped by the user.

The door window 221 includes a double glass structure including inner glass facing the inside (inner space Sp1) of the door body 22 and outer glass facing the outside of the door body 22. The door window 221 includes punching metal which is a metal plate (or a metal sheet) having a large number of holes. Provision of the punching metal prevents an electromagnetic wave from leaking out of the heating chamber 2 through the door window 221.

As illustrated in FIG. 1, when the door body 22 is in an open state (at an open position), the inner space Sp1 in the heating chamber 2 is exposed from the front surface of the box body 21, so that a heating object can be put in and taken out of the heating chamber 2. On the other hand, when the door body 22 is in a closed state (at a closed position), the inner space Sp1 in the heating chamber 2 is in a sealed state, so that a heating object accommodated in the heating chamber 2 can be heated.

Therefore, the user first puts a heating object into the heating chamber 2 with the door body 22 opened, and closes the door body 22. In this state, the heating object in the heating chamber 2 is irradiated with an electromagnetic wave from a heating source so that the heating object is heated. Then, after the heating object is heated, the user opens the door body 22 and takes out the heating object from the heating chamber 2.

Here, the heating chamber 2 includes a panel member 3 surrounding the inner space Sp1. The panel member 3 is a member constituting an inner surface (inner side surface) of the heating chamber 2. An inner surface of the heating chamber 2 includes an upper surface (top surface), a lower surface (bottom surface), a left side surface, a right side surface, a back surface, and a front surface of the inner space Sp1. That is, the panel member 3 is provided at each portion facing the inner space Sp1 of the box body 21 and the door body 22.

In the present embodiment, as an example, as illustrated in FIG. 1, the box body 21 includes a first panel 31, a second panel 32, a third panel 33, a fourth panel 34, and a fifth panel 35 as the panel members 3. The first panel 31 constitutes an upper surface (top surface) of the inner space Sp1, and the second panel 32 constitutes a lower surface (bottom surface) of the inner space Sp1. The third panel 33 constitutes a left side surface of the inner space Sp1, the fourth panel 34 constitutes a right side surface of the inner space Sp1, and the fifth panel 35 constitutes a rear surface of the inner space Sp1.

In other words, a space surrounded by the panel member 3 is an inner space of the heating chamber 2 (that is, the inner space Sp1) capable of accommodating a heating object. The panel member 3 is made from metal so as to reflect an electromagnetic wave emitted into the heating chamber 2. That is, the panel member 3 is made from metal, reflects an electromagnetic wave with which the inner space Sp1 is irradiated, and efficiently irradiates a heating object with an electromagnetic wave.

In the present embodiment, as an example, only the box body 21 is provided with the first panel 31 to the fifth panel 35 as the panel member 3, and each of the first panel 31 to the fifth panel 35 is constituted by a metal plate having predetermined thickness. However, the panel member 3 may be divided into a plurality of members, and for example, the second panel 32, the third panel 33, the fourth panel 34, and the like may be integrally constituted.

Here, at least the first panel 31 to the fifth panel 35 as the panel member 3 are electrically connected to a grounding point electrically connected to, for example, a ground terminal of an outlet with a ground terminal. That is, as the first panel 31 to the fifth panel 35 are grounded, a shielding effect against an electromagnetic wave (here, microwave) is enhanced. Therefore, an electromagnetic wave is shielded by the panel member 3, and hardly leaks to the outside of the heating chamber 2 (to the outside of the inner space Sp1).

Further, the heating cooker 100 according to the present embodiment further includes a power supply unit, an operation unit, a control unit, and the like. Furthermore, the heating cooker 100 further includes various sensors such as a weight sensor and a temperature sensor.

The operation unit is arranged on a front surface of the door body 22, for example. The operation unit includes a plurality of buttons, dials, and the like that can be pressed and operated by the user. The operation unit receives, for example, start and stop of heating of a heating object, setting operation of heating intensity, heating time, and heating mode, and the like.

The control unit is electrically connected to a heating source, a power supply unit, an operation unit, and the like. The control unit mainly includes a computer system including one or more processors such as a central processing unit (CPU) and one or more memories such as a read only memory (ROM) and a random access memory (RAM), and executes various types of processing (information processing). The control unit controls each unit of the heating cooker 100 according to operation of the operation unit.

The heating cooker 100 according to the present embodiment further includes an imaging device 4 that captures the inner space Sp1. The imaging device 4 is a camera including an imaging element (photoelectric conversion element) such as a charge coupled device (CCD) sensor or a complementary metal-oxide-semiconductor (CMOS) sensor. The imaging device 4 including a camera includes an optical system such as a lens in addition to an imaging element, and outputs an image of the inner space Sp1 as needed.

In the present embodiment, the imaging device 4 is connected to the control unit, and an image captured by the imaging device 4 is input to the control unit regularly or irregularly. The control unit performs appropriate image processing on an image of the inside of the heating chamber 2 (inner space Sp1) to monitor a state of the inside of the heating chamber 2 to be used for favorable control of each part of the heating cooker 100.

As an example, the control unit estimates what a heating object accommodated in the heating chamber 2 is, or in what state (presence or absence of a lid) the heating object is accommodated based on an image acquired from the imaging device 4, and automatically sets heating intensity, heating time, a heating mode, and the like. Further, the control unit may use an image acquired from the imaging device 4 to detect whether a heating object is put into or taken out of the heating chamber 2, detect dirt in the heating chamber 2 (or on the door window 221), and monitor other parts (including the outside of the heating chamber 2).

Here, the imaging device 4 is fixed to the panel member 3 surrounding the inner space Sp1 such that the inner space Sp1 is included in a field of view. In the present embodiment, in particular, the imaging device 4 is fixed obliquely downward to the first panel 31 constituting an upper surface (top surface) of the inner space Sp1 of the panel member 3. By this, the imaging device 4 can capture the inner space Sp1 as looking down from obliquely above.

### [2] DETAILED CONFIGURATION AROUND IMAGING DEVICE

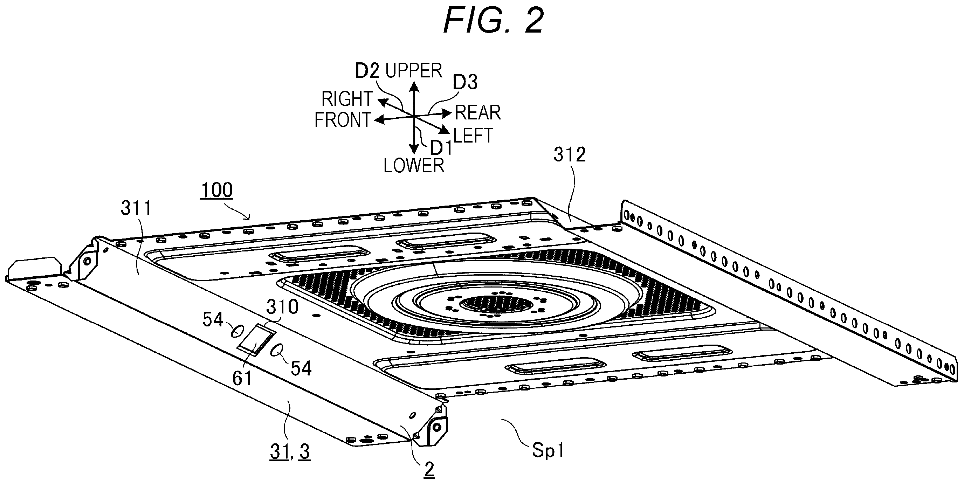

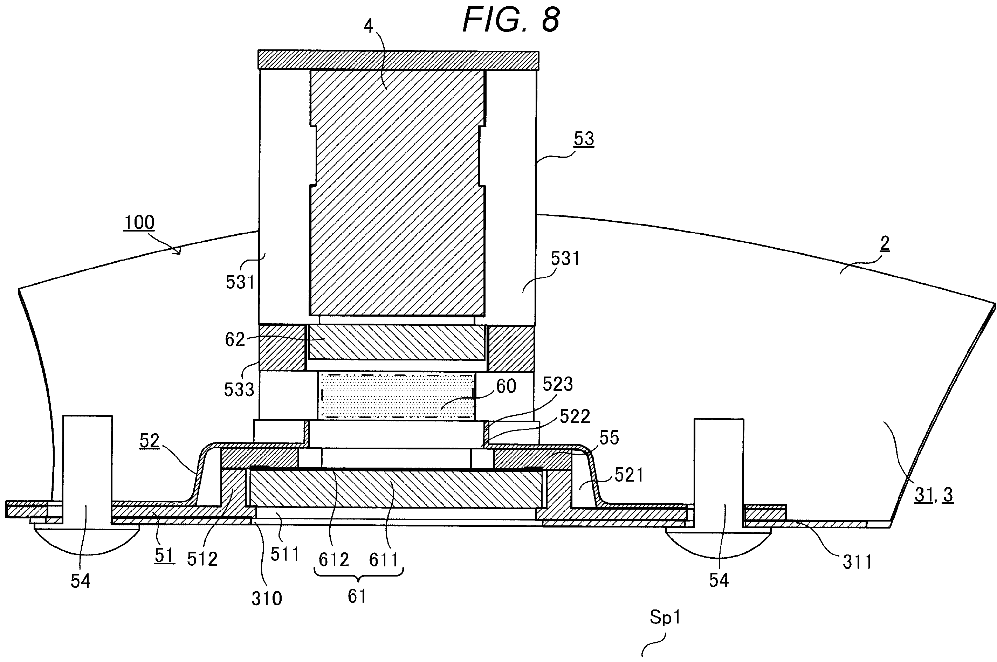

Next, a more detailed configuration around the imaging device 4 (camera) in the heating cooker 100 according to the present embodiment will be described with reference to FIGS. 2 to 9.

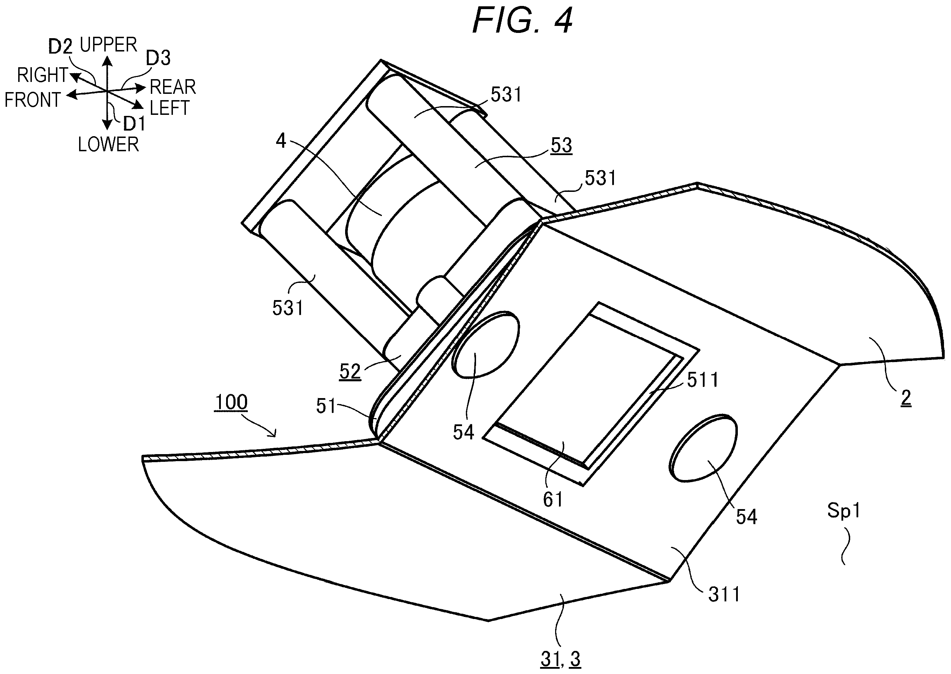

In FIGS. 2 to 8, only the first panel 31 to which the imaging device 4 is fixed, the imaging device 4, and peripheral members of the imaging device 4 such as a glass holder 51 and a cover plate 52 are illustrated, and illustration of other members is appropriately omitted. Further, in FIGS. 4 to 8, only a portion around the imaging device 4 is cut out and illustrated with respect to the first panel 31.

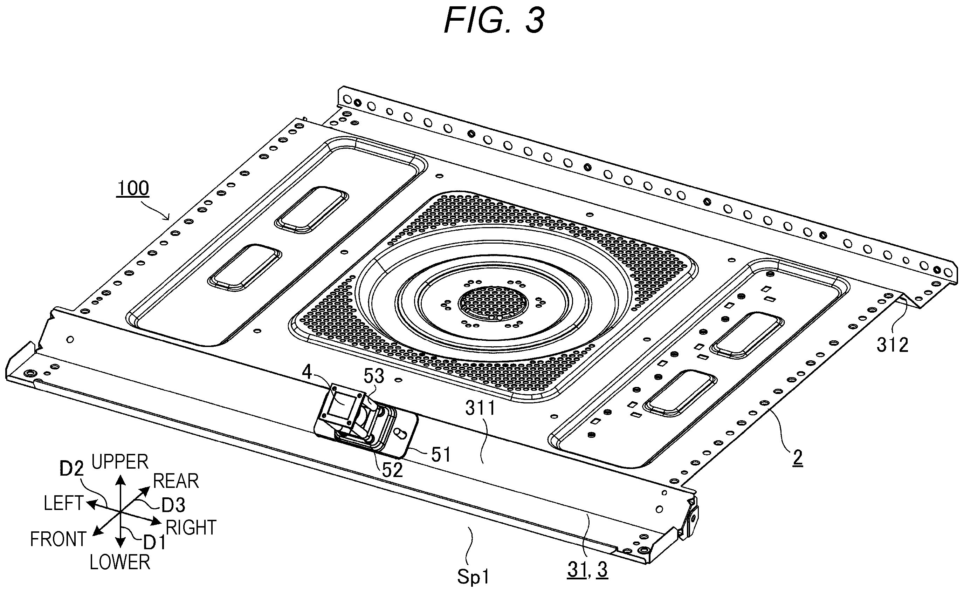

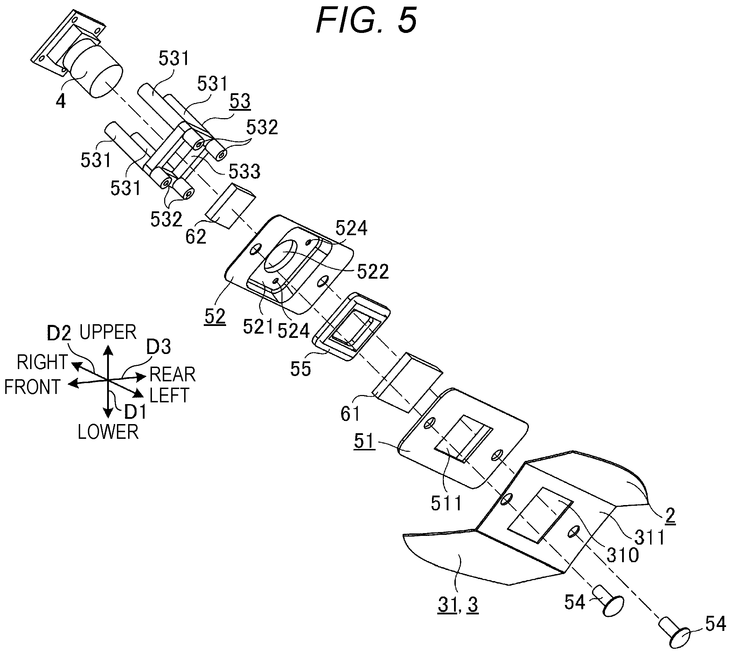

As illustrated in FIGS. 2 and 3, the heating cooker 100 according to the present embodiment includes the glass holder 51, the cover plate 52, a camera holder 53, a screw 54, first glass 61, second glass 62, and the like. Further, the heating cooker 100 further includes an elastic member 55 (see FIG. 5).

The imaging device 4 is fixed to a central portion in the left-right direction D2 of a front end portion of the first panel 31. Specifically, the first panel 31 is formed by bending a metal plate, and has inclined portions 311 and 312 inclined so as to be lower toward both end sides in the front-rear direction D3 at both end portions in the front-rear direction D3.

The imaging device 4 is supported by the inclined portion 311 on the front side of the first panel 31. More specifically, an opening portion 310 (see FIG. 5) is formed at a central portion in the left-right direction D2 of the inclined portion 311 of the first panel 31. The opening portion 310 is a through hole penetrating (the inclined portion 311 of) the first panel 31 in a thickness direction. Here, as an example, the opening portion 310 is opened in a rectangular shape having length in the left-right direction D2. The imaging device 4 is arranged above the first panel 31, that is, outside the heating chamber 2, at a position corresponding to the opening portion 310.

Further, the imaging device 4 is arranged in a posture in which an optical axis of an optical system is inclined downward (obliquely downward) from a horizontal direction such that the optical axis of the optical system passes through substantially the center of the opening portion 310. In the present embodiment, as an example, the inclined portion 311 is inclined rearward by 45 degrees. For this reason, the imaging device 4 is also arranged in a posture in which an optical axis of the optical system is inclined rearward by 45 degrees with respect to the vertical direction.

By this, the imaging device 4 arranged outside the heating chamber 2 (above the first panel 31) can capture the inside of the heating chamber 2 (inner space Sp1) through the opening portion 310. That is, the imaging device 4 can capture the inner space Sp1 in a bird's-eye view manner from obliquely forward and upward.

In the present embodiment, as illustrated in FIGS. 3 to 6, the imaging device 4 is supported above the first panel 31, that is, outside the heating chamber 2 by the camera holder 53. The camera holder 53 has, around an optical axis of the optical system of the imaging device 4, a plurality of (here, four) leg portions 531 extending along the optical axis. Here, as an example, the camera holder 53 is made from resin (resin molded product).

The camera holder 53 is attached to the panel member 3 from the outside (upper side) of the heating chamber 2 in a posture in which one end (lower end) of a plurality of the leg portions 531 faces the panel member 3 (first panel 31) side, and the imaging device 4 is attached to another end (upper end) of a plurality of the leg portions 531. Specifically, the camera holder 53 is fixed to the cover plate 52 by a fastening tool such as a screw. Then, the cover plate 52 is fixed to a peripheral portion of the opening portion 310 in the first panel 31 with a pair of the screws 54 in a manner sandwiching the glass holder 51 between them, so that the camera holder 53 is fixed to the panel member 3 (first panel 31). The imaging device 4 is fixed to a plurality of the leg portions 531 by a fastening tool such as a screw.

For this reason, the imaging device 4 is supported by the camera holder 53 in a state of being separated from the panel member 3 (first panel 31) to the outside (upper side) of the heating chamber 2. Furthermore, since a cavity is also secured between a plurality of the leg portions 531 in the camera holder 53, cooling air can pass around the imaging device 4, and a cooling effect of the imaging device 4 can be easily obtained.

More specifically, a screw hole 532 (see FIG. 5) is formed at one end (lower end) of each of a plurality of the leg portions 531 in the camera holder 53. On the other hand, in the cover plate 52, a plurality of clearance holes 524 (see FIG. 5) are formed at positions corresponding to a plurality of the screw holes 532. A fastening tool such as a screw is fastened to the screw hole 532 from the cover plate 52 side (lower side) through the clearance hole 524, so that the camera holder 53 is fixed to the cover plate 52.

The first glass 61 is arranged so as to close the opening portion 310. In the present embodiment, the first glass 61 has a function of limiting (regulating) transmission of an electromagnetic wave (microwave in the present embodiment) used for heating a heating object. That is, the first glass 61 has a function as electromagnetic wave shielding glass (electromagnetic wave shield glass) that shields against and/or absorbs an electromagnetic wave in a high frequency band such as a microwave to limit passage of the electromagnetic wave. The first glass 61 only needs to limit transmission of an electromagnetic wave (microwave), and it is not essential to completely shield an electromagnetic wave.

Furthermore, the first glass 61 includes heat reflecting glass. The "heat reflecting glass" referred to in the present disclosure is a glass member having a function of limiting passage of heat (heat rays) by reflecting heat rays such as an infrared ray. The "heat" used here includes at least heat for heating a heating object in the heating chamber 2 and/or heat generated by a heating object that is heated. The first glass 61 including the heat reflecting glass only needs to limit transmission of a heat ray, and it is not essential to completely shield a heat ray.

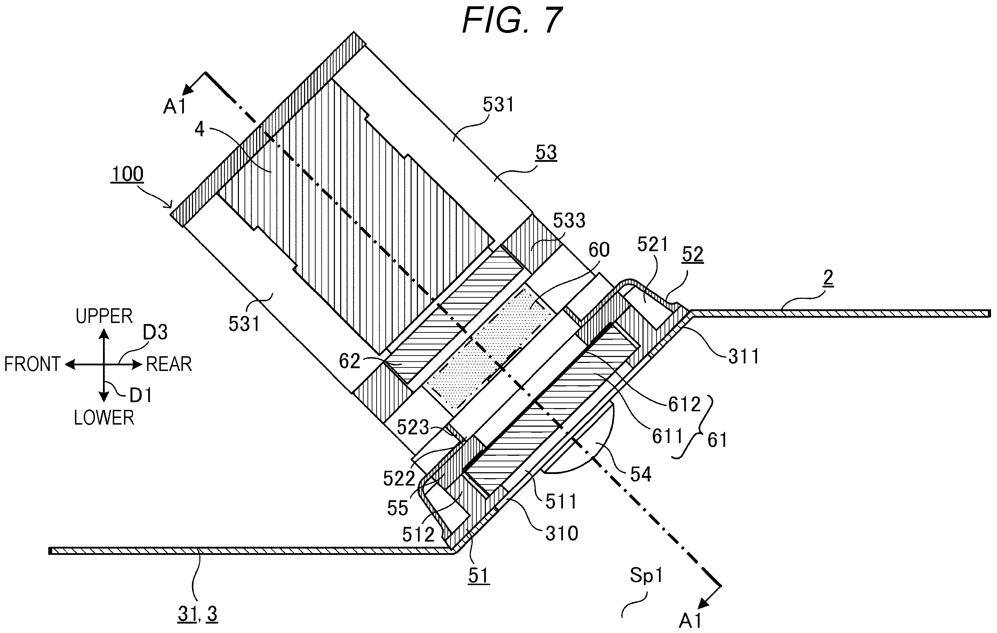

Specifically, the first glass 61 includes a glass plate 611 (see FIG. 7) and a heat reflecting layer 612 (see FIG. 7). The glass plate 611 is tempered glass having sufficient heat resistance and durability, and is formed in a rectangular shape having length in the left-right direction D2. The heat reflecting layer 612 is, for example, a very thin metal film or the like, and is arranged on one surface in a thickness direction of the glass plate 611. The heat reflecting layer 612 is not limited to a single-layer metal film, and may be a multilayer metal film. By this, when a heat ray enters the first glass 61, at least a part of the heat ray is reflected by the heat reflecting layer 612, and transmission of a heat ray through the first glass 61 is limited.

Here, the first glass 61 has transmissivity with respect to at least light in a wavelength range in which the imaging device 4 has sensitivity. That is, first glass 61 has relatively high transmissivity (transparency) with respect to at least light in a visible light region, but limits transmission of an electromagnetic wave in a high frequency band such as a microwave and a heat ray.

For this reason, when the first glass 61 closes the opening portion 310, the imaging device 4 can capture the inner space Sp1 over the first glass 61, that is, through the first glass 61. On the other hand, the first glass 61 closes the opening portion 310, so that an electromagnetic wave (microwave in the present embodiment) emitted to the inner space Sp1 can be prevented from leaking to the outside of the heating chamber 2 (outside of the inner space Sp1) through the opening portion 310. Furthermore, the first glass 61 including heat reflecting glass closes the opening portion 310, so that it is possible to prevent heat (radiant heat) inside the inner space Sp1 from leaking to the outside of the heating chamber 2 (outside of the inner space Sp1) through the opening portion 310.

The first glass 61 is attached to the panel member 3 (first panel 31) so as to be sandwiched between the glass holder 51 and the cover plate 52 in an optical axis direction of the optical system of the imaging device 4. Specifically, both the glass holder 51 and the cover plate 52 are frame-shaped members having through hole 511 and 522, and are coupled to each other by being fixed to a peripheral portion of the opening portion 310 in the first panel 31 in a state where the first glass 61 is sandwiched between them.

The glass holder 51 is located on the outer side (the upper side) of the heating chamber 2 with respect to the first panel 31, and the cover plate 52 is located on the outer side (the upper side) of the heating chamber 2 with respect to the glass holder 51. Here, as an example, both the glass holder 51 and the cover plate 52 are formed in a rectangular frame shape having length in the left-right direction D2. Further, as an example, the glass holder 51 is made from resin (resin molded product), and the cover plate 52 is made from metal.

Then, the glass holder 51 and the cover plate 52 are fixed to a peripheral portion of the opening portion 310 in the first panel 31 by a pair of the screws 54 in a state where the first glass 61 is sandwiched between them. In the present embodiment, a pair of the screws 54 are inserted from the inner side of the heating chamber 2, that is, from the first panel 31 side, and is fastened to the cover plate 52 through the glass holder 51. By this, the glass holder 51 and the cover plate 52 are fixed to the first panel 31. As a result, the first glass 61 held in a form of being sandwiched between the glass holder 51 and the cover plate 52 is attached to the panel member 3 (first panel 31) so as to close the opening portion 310.

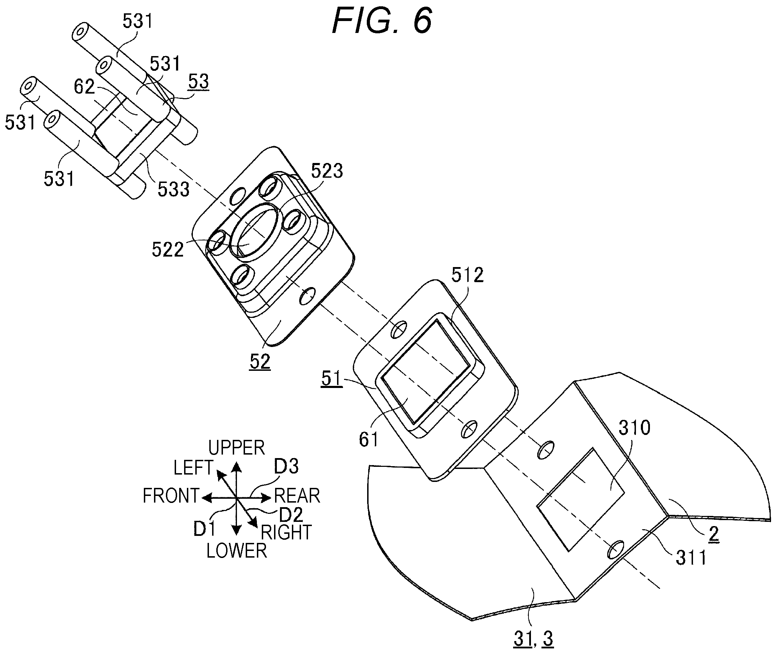

As illustrated in FIGS. 5 and 6, the glass holder 51 has the through hole 511 opened in a rectangular shape, and the cover plate 52 has the through hole 522 opened in a circular shape. For this reason, the first glass 61 held in a manner of being sandwiched between the glass holder 51 and the cover plate 52 is exposed to the inner side (lower side) of the heating chamber 2 through the through hole 511 (and the opening portion 310), and is exposed to the outer side (upper side) of the heating chamber 2 through the through hole 522. Therefore, the imaging device 4 can capture the inner space Sp1 over the first glass 61 through the through hole 522, the through hole 511, and the opening portion 310.

More specifically, as illustrated in FIGS. 5 and 6, the glass holder 51 has the through hole 511 penetrating the glass holder 51 in a thickness direction at a central portion of a surface (lower surface) facing the inner side (lower side) of the heating chamber 2. The through hole 511 opens in a rectangular shape having length in the left-right direction D2. Furthermore, the glass holder 51 has a peripheral wall 512 protruding to the outer side (upper side) of the heating chamber 2 around the through hole 511 on a back surface (upper surface) facing the outer side (upper side) of the heating chamber 2. An inner peripheral edge of the peripheral wall 512 is slightly larger than an inner peripheral edge of the through hole 511. That is, the through hole 511 is arranged on the inner side of the peripheral wall 512 when viewed from the outer side (upper side) of the heating chamber 2.

As illustrated in FIGS. 5 and 6, the cover plate 52 has a recessed portion 521 at a central portion of a surface (lower surface) facing the inner side (lower side) of the heating chamber 2. The recessed portion 521 opens in a rectangular shape having length in the left-right direction D2. The through hole 522 penetrating the cover plate 52 in a thickness direction is formed at a central portion of a bottom surface of the recessed portion 521. The through hole 522 opens in a perfect circular shape. Furthermore, the cover plate 52 has a peripheral wall 523 protruding to the outer side (upper side) of the heating chamber 2 around the through hole 522 on a back surface (upper surface) facing the outer side (upper side) of the heating chamber 2. An inner peripheral edge of the peripheral wall 523 coincides with an inner peripheral edge of the through hole 522. That is, an inner peripheral surface of the peripheral wall 523 and an inner peripheral surface of the through hole 522 are continuously formed without a seam. By providing the peripheral wall 523 (burring), an electromagnetic wave is less likely to pass through the through hole 522 as compared with a case where the through hole 522 has the same diameter and the peripheral wall 523 is not provided. In other words, by providing the peripheral wall 523, a diameter of the through hole 522 can be made slightly larger while transmission of an electromagnetic wave is suppressed, and a visual field of the imaging device 4 can be easily secured. Further, a plurality (here, four) of the clearance holes 524 for fixing the camera holder 53 are formed at four corners of a bottom surface of the recessed portion 521 of the cover plate 52.

Then, as illustrated in FIGS. 6 to 8, the first glass 61 is accommodated in a region surrounded by the peripheral wall 512 on the back surface (upper surface) side of the glass holder 51. In this state, movement of the first glass 61 in a plane along the back surface of the glass holder 51 is restricted by the peripheral wall 512, and movement of the first glass 61 to the inner side (lower side) of the heating chamber 2 is restricted by the glass holder 51. Further, the first glass 61 and the peripheral wall 512 are accommodated in the recessed portion 521 of the cover plate 52. In this state, the glass holder 51 is in close contact with a peripheral portion of the recessed portion 521 on a surface (lower surface) of the cover plate 52.

Here, the heat reflecting layer 612 of the heat reflecting glass (first glass 61) is arranged toward the outer side (upper side) of the heating chamber 2. That is, the first glass 61 has the heat reflecting layer 612 on one surface in a thickness direction, and the heat reflecting layer 612 is arranged on a surface (back surface) on a side facing a bottom surface of the recessed portion 521 of the cover plate 52 of the first glass 61.

By this, the first glass 61 can efficiently reflect a heat ray from the inside of the heating chamber 2, and leakage of a heat ray from the heating chamber 2 can easily be reduced.

Further, the heat reflecting layer 612 of the heat reflecting glass (first glass 61) is electrically connected to the panel member 3 (first panel 31). If the heat reflecting layer 612 of the first glass 61 is not grounded or the like and is in an electrically floating state, shielding performance against an electromagnetic wave by the first glass 61 is not sufficient, and in some cases, an electromagnetic wave may leak out of the heating chamber 2 through the opening portion 310. Therefore, in the present embodiment, the heat reflecting layer 612 of the first glass 61 is electrically connected to the panel member 3 (the first panel 31) to have the same potential as the panel member 3, so that shielding performance against an electromagnetic wave by the heat reflecting layer 612 is improved, and an electromagnetic wave is prevented from leaking out of the heating chamber 2 through the opening portion 310.

That is, as the heat reflecting layer 612 of the first glass 61 is electrically connected to the panel member 3, the first glass 61 has the same potential as the panel member 3, and shielding performance against an electromagnetic wave (microwave) by the first glass 61 is improved. Therefore, the heating cooker 100 according to the present embodiment has an advantage that the first glass 61 more reliably prevents an electromagnetic wave from leaking out of the heating chamber 2 through the opening portion 310, and an electromagnetic wave is less likely to leak out of the heating chamber 2.

In short, an electromagnetic wave can be prevented from leaking through the opening portion 310 as the opening portion 310 is closed with the first glass 61 and the heat reflecting layer 612 is electrically connected to the panel member 3 while the imaging device 4 can capture the inner space Sp1. In particular, in the present embodiment, since the panel member 3 (first panel 31) is grounded, the heat reflecting layer 612 of the first glass 61 is also grounded. For this reason, the first glass 61 also has an improved shielding effect against an electromagnetic wave (microwave in this case), so that an electromagnetic wave is less likely to leak out of the heating chamber 2 through the opening portion 310.

The heat reflecting layer 612 only needs to be electrically connected to the panel member 3 (first panel 31), and various parts such as bonding, adhesion, and welding can be employed as a connecting part of them. Further, the heat reflecting layer 612 and the panel member 3 (first panel 31) may be electrically connected via a bump, a bonding wire, or the like.

Further, the elastic member 55 is interposed between a bottom surface of the recessed portion 521 of the cover plate 52 and the first glass 61. The elastic member 55 has elasticity at least at a contact portion with the first glass 61, and is formed in a frame shape. In the present embodiment, as an example, the elastic member 55 is made from rubber (rubber packing), and is formed in a rectangular frame shape having length in the left-right direction D2. Since the elastic member 55 is located between a bottom surface of the recessed portion 521 and the first glass 61, the first glass 61 is pressed against the glass holder 51 by the elastic member 55 and bonded to the glass holder 51.

In short, the heating cooker 100 includes the elastic member 55 that bonds the first glass 61 to the glass holder 51. As a result, for example, even when vibration or the like is applied to the panel member 3, positional displacement is less likely to occur in the first glass 61.

Since the first glass 61 includes heat reflecting glass, it is possible to prevent heat (radiant heat) in the inner space Sp1 from leaking to the outside of the heating chamber 2 (the outside of the inner space Sp1) through the opening portion 310. However, it is difficult to completely shield against a heat ray with the first glass 61. For this reason, a considerable amount of heat in the inner space Sp1 may leak to the outside of the heating chamber 2 through the opening portion 310 (first glass 61). Then, since the imaging device 4 is arranged at a position corresponding to the opening portion 310, heat transfer to the imaging device 4 may lead to deterioration of the imaging device 4. **In** view of the above, in the present embodiment, deterioration of the imaging device 4 is suppressed by providing a part for preventing heat of the inner space Sp1 from being transferred to the imaging device 4.

**In** short, the heating cooker 100 according to the present embodiment includes the heating chamber 2, the first glass 61, and the imaging device 4 as illustrated in FIGS. 7 to 8. The heating chamber 2 has the panel member 3 surrounding the inner space Sp1 capable of accommodating a heating object, and heats a heating object using an electromagnetic wave. The first glass 61 closes the opening portion 310 formed in a part of the panel member 3. The imaging device 4 is arranged on the outer side of the heating chamber 2 and captures the inner space Sp1 through the first glass 61. Here, a heat insulating layer 60 is located between the first glass 61 and the imaging device 4.

That is, when viewed from the first glass 61, the heat insulating layer 60 is arranged on the outer side (upper side) of the heating chamber 2 in front of the imaging device 4. In the present embodiment, the heat insulating layer 60 is an air layer located between the first glass 61 and the optical system of the imaging device 4 in an optical axis direction of the optical system of the imaging device 4. However, the heat insulating layer 60 is not limited to an air layer, and may be a layer having lower thermal conductivity than at least the first glass 61, such as a vacuum layer, a gas layer other than air, or a liquid layer. That is, the optical system of the imaging device 4 is thermally separated from the first glass 61 by the heat insulating layer 60, and heat transmitted through the first glass 61 hardly reaches the imaging device 4.

As described above, with the heat insulating layer 60, even if a considerable amount of heat in the inner space Sp1 leaks to the outside of the heating chamber 2 through the opening portion 310 (first glass 61), the heat hardly reaches the imaging device 4. Therefore, the heating cooker 100 according to the present embodiment has an advantage that the imaging device 4 can be protected from heat of the inner space Sp1, and the imaging device 4 is less likely to deteriorate.

Here, the heating cooker 100 according to the present embodiment further includes the second glass 62 arranged between the heat insulating layer 60 and the imaging device 4. That is, the second glass 62 is arranged on the outer side (upper side) of the heating chamber 2 when viewed from the first glass 61 and in front of the imaging device 4. The heat insulating layer 60 is located between the first glass 61 and the second glass 62 in an optical axis direction of the optical system of the imaging device 4. In other words, when viewed from the imaging device 4, between the imaging device 4 and the inner space Sp1 in an optical axis direction of the optical system of the imaging device 4, double layers of glass of the first glass 61 and the second glass 62 exist by sandwiching the heat insulating layer 60.

According to this configuration, even if temperature of the heat insulating layer 60 itself rises, heat of the heat insulating layer 60 is only transmitted to the second glass 62, and is less likely to be transmitted to the imaging device 4. Therefore, heat of the inner space Sp1 is less likely to reach the imaging device 4 as compared with a case where the second glass 62 is not provided.

Specifically, in the present embodiment, the camera holder 53 includes a rectangular frame-shaped coupling portion 533 that couples a plurality of the leg portions 531 at an intermediate portion in a longitudinal direction of a plurality of the leg portions 531. The coupling portion 533 is formed in a substantially square shape, and the second glass 62 is supported by the camera holder 53 so as to be fitted into the coupling portion 533. The second glass 62 is substantially square single plate glass. A holding structure of the second glass 62 by the camera holder 53 can employ an appropriate part such as fitting, snap-fitting, or adhesion. Furthermore, the camera holder 53 may be integrally molded with the second glass 62.

In the present embodiment, similarly to the first glass 61, the second glass 62 has a function of limiting (regulating) transmission of an electromagnetic wave (microwave in the present embodiment) used for heating a heating object. Furthermore, similarly to the first glass 61, the second glass 62 includes heat reflecting glass, and has a function of limiting passage of heat (heat rays).

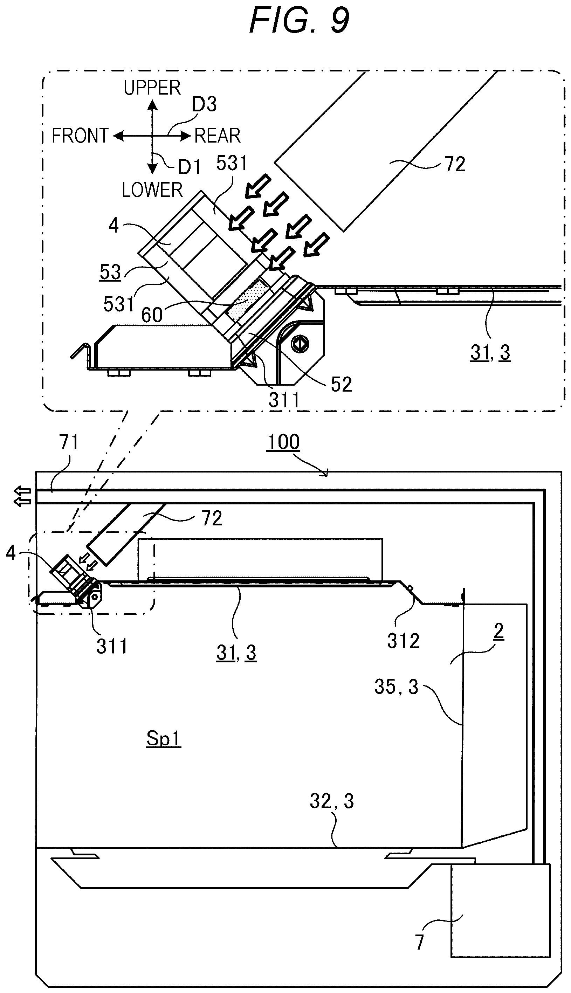

Further, as illustrated in FIG. 9, the heat insulating layer 60 forms a part of an air path through which an air flow passes. The heating cooker 100 according to the present embodiment includes a cooling fan 7 that generates an air flow, a cooling duct 71, and a branch duct 72.

The cooling fan 7 is arranged behind a lower portion of the heating chamber 2, for example. The cooling duct 71 is connected to the cooling fan 7 and forms an air path through which an air flow generated by the cooling fan 7 passes. The cooling duct 71 is connected, through a space above the first panel 31, to an air outlet located above the heating chamber 2 on a front surface of the heating cooker 100. By this, an air flow generated by the cooling fan 7 is blown forward from the air outlet located above the heating chamber 2 through cooling duct 71.

The branch duct 72 is connected to the middle of the cooling duct 71 and branches an air path of an airflow. A tip portion of the branch duct 72 (an end portion on the opposite side to the cooling duct 71) opens toward the imaging device 4. That is, an airflow generated by the cooling fan 7 is branched into an airflow blown out to the outside of the heating cooker 100 from an air outlet through the cooling duct 71 and an airflow blown out toward the imaging device 4 through the cooling duct 71 and the branch duct 72.

Here, an airflow (indicated by an outlined arrow in FIG. 9) blown out from the branch duct 72 passes between a plurality of the leg portions 531 in the camera holder 53 and around the imaging device 4 as cooling air. Further, at least a part of an airflow blown out from the branch duct 72 passes through the heat insulating layer 60. By this, increase in temperature of the heat insulating layer 60 can be suppressed, and heat is less likely to be transferred to the imaging device 4.

### [3] VARIATION

Hereinafter, a variation of the first embodiment will be listed. Variations described below can be appropriately combined and applied.

The first glass 61 may have a function as a heat absorbing glass in addition to or instead of the function as heat reflecting glass (function of reflecting a heat ray). The heat absorbing glass is glass colored by adding a trace amount of a metal component in a glass composition, and has a function of absorbing a heat ray.

Further, at least one of a function of limiting transmission of electromagnetic waves such as a microwave and a function of limiting transmission of heat rays may be omitted from at least one of the first glass 61 and the second glass 62. That is, at least one of the first glass 61 and the second glass 62 does not need to have a function of limiting transmission of heat rays as, for example, heat reflecting glass (and heat absorbing glass).

Further, it is not essential for the heat reflecting layer 612 of the first glass 61 to be arranged toward the outer side (upper side) of the heating chamber 2, and the heat reflecting layer 612 may be arranged toward the inner side (lower side) of the heating chamber 2.

Further, it is not essential for the heat reflecting layer 612 of the heat reflecting glass (first glass 61) to be electrically connected to the panel member 3 (first panel 31), and the heat reflecting layer 612 may be electrically disconnected from the panel member 3.

Further, the opening portion 310 only needs to be arranged at any position of the panel member 3, and may be provided, for example, in a rear end portion of the first panel 31, or may be provided in the second panel 32, the third panel 33, the fourth panel 34, or the fifth panel 35. Furthermore, in a case where the imaging device 4 is arranged on the door body 22, the opening portion 310 may be provided in a panel member constituting an inner surface of the door body 22.

Further, various components such as the glass holder 51 and the camera holder 53 are not limited to those made from resin, and for example, at least a part of such components may be made from metal or the like. Further, the cover plate 52 is not limited to one that is made from metal, and for example, at least a part of the cover plate 52 may be made from resin (a resin molded product).

Further, the elastic member 55 is not limited to one that is made from rubber, and may include, for example, a leaf spring, a coil spring, or another elastic body.

### SUPPLEMENTARY NOTE OF INVENTION

Hereinafter, an outline of the invention extracted from the above-described embodiment will be additionally described. Note that each configuration and each processing function described in a supplementary note below can be selected and optionally combined.

### SUPPLEMENTARY NOTE 1

A heating cooker including:
a heating chamber including a panel member surrounding an inner space capable of accommodating a heating object, the heating chamber being configured to heat the heating object by using an electromagnetic wave;
first glass that closes an opening portion formed in a part of the panel member; and
an imaging device that is arranged on an outer side of the heating chamber and configured to capture the inner space through the first glass, in which
a heat insulating layer is located between the first glass and the imaging device.

### SUPPLEMENTARY NOTE 2

The heating cooker according to Supplementary note 1, further including second glass arranged between the heat insulating layer and the imaging device.

### SUPPLEMENTARY NOTE 3

The heating cooker according to Supplementary note 1 or 2, in which the heat insulating layer forms a part of an air path through which an air flow passes.

### SUPPLEMENTARY NOTE 4

The heating cooker according to any of Supplementary notes 1 to 3, in which the first glass includes heat reflecting glass.

### SUPPLEMENTARY NOTE 5

The heating cooker according to Supplementary note 4, in which a heat reflecting layer of the heat reflecting glass is arranged toward an outer side of the heating chamber.

### SUPPLEMENTARY NOTE 6

The heating cooker according to Supplementary note 4 or 5, in which a heat reflecting layer of the heat reflecting glass is electrically connected to the panel member.

## Claims

1. A heating cooker (100) comprising:
a heating chamber (2) including a panel member (3) surrounding an inner space (Sp1) capable of accommodating a heating object, the heating chamber (2) being configured to heat the heating object by using an electromagnetic wave;
first glass (61) that closes an opening portion (310) formed in a part of the panel member (3); and
an imaging device (4) that is arranged on an outer side of the heating chamber (2) and configured to capture the inner space (Sp1) through the first glass (61), wherein
a heat insulating layer (60) is located between the first glass (61) and the imaging device (4).

2. The heating cooker (100) according to claim 1, further comprising second glass (62) arranged between the heat insulating layer (60) and the imaging device (4).

3. The heating cooker (100) according to claim 1 or 2, wherein the heat insulating layer (60) forms a part of an air path through which an air flow passes.

4. The heating cooker (100) according to claim 1 or 2, wherein the first glass (61) includes heat reflecting glass.

5. The heating cooker (100) according to claim 4, wherein a heat reflecting layer (612) of the heat reflecting glass is arranged toward an outer side of the heating chamber (2).

6. The heating cooker (100) according to claim 4, wherein a heat reflecting layer (612) of the heat reflecting glass is electrically connected to the panel member (3).
